(19)

Europäisches Patentamt
European Patent Office
Office européen des brevets

(11) **EP 2 275 492 A2**

(12) **EUROPEAN PATENT APPLICATION**

(43) Date of publication:
**19.01.2011 Bulletin 2011/03**

(51) Int Cl.:
*C08L 83/04* (2006.01)   *C09K 3/10* (2006.01)

(21) Application number: **10012483.3**

(22) Date of filing: **28.02.2005**

(84) Designated Contracting States:
**CH DE IT LI**

(30) Priority: **01.03.2004 US 548969 P**
**26.10.2004 US 973723**

(62) Document number(s) of the earlier application(s) in accordance with Art. 76 EPC:
**05714071.7 / 1 723 201**

(71) Applicant: **General Electric Company**
**Schenectady, NY 12345 (US)**

(72) Inventors:
• **Williams, David A.**
**Ganesvoort, NY 12831 (US)**

• **Correia, Reuben**
**Watervliet, NY 12189 (US)**
• **Lucas, Gary Morgan**
**Glenville, NY 12302 (US)**

(74) Representative: **Thoma, Michael et al**
**Lorenz - Seidler - Gossel**
**Widenmayerstraße 23**
**80538 München (DE)**

Remarks:
This application was filed on 30-09-2010 as a divisional application to the application mentioned under INID code 62.

(54) **RTV silicone composition offering rapid bond strength**

(57)   The present invention provides for a room temperature vulcanizable silicone sealant composition that rapidly achieves a usable green strength shortly after application. Such a composition that develops a usable green strength is useful in the manufacture of architectural elements employing glazing such as windows and doors and when such a composition is used in a manufacturing process, the manufacturing process can be accelerated relative to a process that uses a silicone sealant that does not rapidly achieve a usable green strength.

**EP 2 275 492 A2**

**Description**

CROSS REFERENCE TO RELATED APPLICATIONS

This application claims the benefit of U.S. Provisional Application Serial No. 60/548,969, filed March 1, 2004

BACKGROUND OF THE INVENTION

Moisture curable compositions are well known for their use as sealants. Moisture curable compositions require a significant amount of time, commonly several days, in which to fully cure before reaching maximum strength. In certain applications that utilize sealant in assembly line applications (e.g. window assembly), it is desirable to use a sealant that can rapidly develop green strength.

BRIEF DESCRIPTION OF THE INVENTION

The present invention provides for a sealant composition comprising:

(a) a diorganopolysiloxane in an amount ranging from about 5 weight percent to about 80 weight percent wherein the silicon atom at each polymer chain end is silanol terminated;

(b) diorganopolysiloxane in an amount ranging from slightly above 0 weight percent to about 35 weight percent wherein the silicon atom at each polymer chain end is alkyl terminated;

(c) an alkylsilicate in an amount ranging from about 0.1 weight percent to about 10 weight percent;

(d) a condensation catalyst comprising an organotin compound in an amount ranging from about 0.001 weight percent to about 1 weight percent;

(e) an alkoxysilane (adhesion promoter) in an amount ranging from about 0.1 weight percent to about 20 weight percent;

(f) a reinforcing filler(s) selected from the group consisting of ground, precipitated and colloidal Calcium carbonates which is treated with compounds such as stearate or stearic acid; reinforcing silicas such as fumed silicas, precipitated silicas, silica gels and hydrophobized silicas and silica gels; crushed and ground quartz, alumina, aluminum hydroxide, titanium hydroxide, clays such as kaolin, bentonite or montmorillonite, diatomaceous earth, iron oxide, carbon black and graphite in an amount ranging from about 1 weight percent to about 80 weight percent;

(g) a non-ionic surfactant selected from the group of polyalkyleneoxide modified organosilicone co-polymer in an amount ranging from about 0 weight percent to about 10 weight percent;

wherein said sealant composition has a green strength of from about I psi to about 75 psi as measured by WPSTM test C-1221 after a time period of from about 1 minute to about 60 minutes.

The present invention further provides for a manufacturing process for manufacturing architectural elements said architectural elements comprising the sealant of claim I said sealant having a green strength between about 1 psi and about 75 psi after a period of time ranging from about 1 mins. to about 40 minutes, wherein said manufacturing process produces said architectural elements at a rate faster than a similar process using a sealant having a green strength of 0 psi after 60 mins.

DESCRIPTION OF THE INVENTION

We now disclose sealant compositions that rapidly develop green strength. These compositions have as an advantage allowing the sealant user to handle, package and ship the assembled construction after shorter cure times without deleterious effect to the assembled construction, thus increasing production line speed and lowering product inventory. The term "green strength" as defined herein means a high modulus skin of sufficient strength that elements of a construction can be formed and will maintain the desired configuration even if handled, packaged, and shipped after relatively short times, without showing permanent deformation.

The present invention is comprised of a 2-part room temperature vulcanizing (RTV) silicone composition curable in the presence of moisture. A general description of each of the components of the 2-part formulation are given as follows:

(a) a diorganopolysiloxane wherein the silicon atom at each polymer chain end is silanol terminated; whereby the viscosity of the siloxane is about 1,000 to 200,000 cps at 25°C;

(b) a diorganopolysiloxane wherein the silicon atom at each polymer chain end is alkyl terminated; whereby the viscosity of the siloxane is about 1,000 to 200,000 cps at 25°C;

(c) an alkylsilicate (cross-linker);

(d) a condensation catalyst comprising organotin compounds being preferred and more specifically dibutyltin dilaurate being preferred

(e) an alkoxysilane adhesion promoter;

(f) an optional reinforcing filler (use of more than 1 filler is common);

(g) an optional non-ionic surfactant selected.

More specifically, the "A or first component" of the 2-part formulation usually comprises (a), (b) (f), and (g). Additionally, the "B or second component" usually comprises (b), (c), (d), (e), and (f); however other variations on the partitioning of these components would be known to be useful by the skilled artisan. In a typical formulation, the ratio of "component A" to "component B" is adjusted to provide optimal performance properties, more typically the A to B ratio for the preferred embodiment is approximately 13 to 1 by weight.

The compositions of the present invention may be prepared using other ingredients that are conventionally employed in RTV silicone compositions such as colorants, pigments and plasticizers, as long as they do not interfere with the desired properties. The level of incorporation of the diorganopolysiloxane wherein the silicon atom at each polymer chain end is silanol terminated (a) ranges from about 5 weight % to about 80 weight %, more preferably from about 15 weight % to about 60 weight %, and most preferably from about 35 weight % to about 45 weight % of the total composition. The silanol terminated diorganopolysiloxane generally has the formula:

$$M_a D_b D'_c$$

with the subscript a = 2 and b equal to or greater than I and with the subscript c zero or positive where

$$M = (HO)_{3-x-y} R^1_x R^2_y SiO_{1/2};$$

with the subscript x = 0, 1 or 2 and the subscript y is either 0 or 1, subject to the limitation that x + y is less than or equal to 2, where $R^1$ and $R^2$ are independently chosen monovalent C1 to C60 hydrocarbon radicals; where

$$D = R^3 R^4 SiO_{1/2};$$

where $R^3$ and $R^4$ are independently chosen monovalent C1 to C60 hydrocarbon radicals; where

$$D' = R^5 R^6 SiO_{2/2};$$

where $R^5$ and $R^6$ are independently chosen monovalent C1 to C60 hydrocarbon radicals.

The level of incorporation of the diorganopolysiloxane wherein the silicon atom at each polymer chain end is alkyl terminated (b) ranges from slightly above 0 weight % to about 35 weight %, more preferably from about 5 weight % to about 25 weight %, and most preferably from about 8 weight % to about 20 weight % of the total composition.. The alkyl terminated diorganopolysiloxane generally has the formula:

$$M''_e D''_f D'''_g$$

with the subscript e = 2 and f equal to or greater than 1 and with the subscript g zero or positive where

$$M'' = R^7 R^8 R^9 SiO_{1/2};$$

where $R^7$ , $R^8$ and $R^9$ are independently chosen monovalent C1 to C60 hydrocarbon radicals; where

$$D'' = R^{10}R^{11}SiO_{2/2};$$

where $R^{10}$ and $R^{11}$ are independently chosen monovalent C1 to C60 hydrocarbon radicals; where

$$D''' = R^{12}R^{13}SiO_{2/2};$$

where $R^{12}$ and $R^{13}$ are independently chosen monovalent C1 to C60 hydrocarbon radicals.

The level of incorporation of the alkylsilicate (crosslinker, c) ranges from about 0.1 weight % to about 10 weight %, more preferably from about 0.3 weight % to about 5 weight %, and most preferably from about 0.5 weight % to about 1.5 weight % of the total composition. The alkylsilicate generally has the formula:

$$(R^{14}O)(R^{15}O^{15})(R^{16}O)(R^{17}O)Si$$

where $R^{14}$, $R^{15}$, $R^{16}$ and $R^{17}$ are independently chosen monovalent C1 to C60 hydrocarbon radicals.

The RTV silicone composition of the present invention also comprises a condensation catalyst (d). The condensation catalyst can be any of those known to be useful for facilitating crosslinking in silicone sealant compositions. The condensation catalyst may include metal and non-metal catalysts. Examples of the metal portion of the metal condensation catalysts useful in the present invention include tin, titanium, zirconium, lead, iron cobalt, antimony, manganese, bismuth and zinc compounds.

The tin compounds useful for facilitating crosslinking in silicone sealant compositions include: tin compounds such as dibutyltindilaurate, dibutyltindiacetate, dibutyltindimethoxide, tinoctoate, isobutyltintriceroate, dibutyltinoxide, dibutyltin bis-diisooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, and tinbutyrate. In one embodiment, tin compounds and $(C_8H_{17})_2SnO$ dissolved in $(n-C_3H_9O)_4Si$ are used. In another embodiment, diorganotin bis β-diketonates are used. Other examples of tin compounds may be found in US 5,213,899, US 4,554,338, US 4,956,436, and US 5,489,479, the teachings of which are herewith and hereby specifically incorporated by reference. In yet another embodiment, chelated titanium compounds, for example, 1,3-propanedioxytitanium bis(ethylacetoacetate); diisopropoxytitanium bis(ethylacetoacetate); and tetra-alkyl titanates, for example, tetra n-butyl titanate and tetra-isopropyl titanate, are used.

It is preferred that the condensation catalyst of the present invention is a metal catalyst. The preferred metal condensation catalyst is selected from the group consisting of tin compounds with dibutyltindilaurate being preferred.

The level of incorporation of the condensation catalyst, component (d), ranges from about 0.001 weight % to about 1 weight %, more preferably from about 0.003 weight % to about 0.5 weight %, and most preferably from about 0.005 weight % to about 0.1 weight % of the total composition.

The RTV silicone compositions of the present invention may also comprise an alkoxysilane or blend of alkoxysilanes as an adhesion promoter, the preferred combination being a blend of n-2-aminoethyl-3-aminopropyltrimethoxysilane and 1,3,5-tris(trimethoxysilylpropyl)isocyanurate. Other adhesion promoters useful in the present invention are: n-2-aminoethyl-3-aminopropyltriethoxysilane, γ-aminopropyltriethoxysilane, γ-aminopropyltrimethoxysilane, aminopropyltrimethoxysilane, *bis*-γ-trimethoxysilylpropyl)amine, N-Phenyl-y-aminopropyltrimethoxysilane, triaminofunctionaltrimethoxysilane, γ-aminopropylmethyldiethoxysilane, γ- aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilanc, β-(3,4-epoxycyclohexyl) ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, and n-ethyl-3-trimethoxysilyl-2-methylpropanamine.

The level of incorporation of the alkoxysilane (adhesion promoter, e) ranges from about 0.1 weight % to about 20 weight %, more preferably from about 0.3 weight % to about 10 weight %, and most preferably from about 0.5 weight % to about 2 weight % of the total composition.

The RTV (room temperature vulcanizable) silicone compositions of the present invention may also comprise a filler. The fillers useful in the present invention is a filler or mixture of fillers that is selected from those known to be useful in RTV silicone sealants. The fillers include ground, precipitated and colloidal calcium carbonates which is treated with compounds such as stearate or stearic acid; reinforcing silicas such as fumed silicas, precipitated silicas, silica gels and hydrophobized silicas and silica gels; crushed and ground quartz, alumina, aluminum hydroxide, titanium hydroxide, diatomaceous earth, iron oxide, carbon black and graphite or clays such as kaolin, bentonite or montmorillonite for example.

Preferably, the filler is a calcium carbonate filler, silica filler or a mixture thereof. The type and amount of filler added depends upon the desired physical properties for the cured RTV silicone composition. The amount of filler useful in the present invention is from about 5 weight % to about 80 weight %, more preferably from about 20 weight % to about 60 weight %, and most preferably from about 37 weight % to about 49 weight % of the total composition. The filler may be a single species or a mixture of two or more species.

Optional component (g) comprises a non-ionic surfactant compound selected from the group of surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and copolymers of silicones and polyethers (silicone polyether copolymers), copolymers of silicones and copolymers of ethylene oxide and propylene oxide and mixtures thereof in an amount ranging from slightly above 0 weight % to about 10 weight %, more preferably from about 0.1 weight % to about 5 weight %, and most preferably from about 0.5 weight % to about 0.75 weight % of the total composition. The use of silicone polyether as a non-ionic surfactant is described in US 5,744,703 the teachings of which are herewith and hereby specifically incorporated by reference.

Furthermore, these compositions can be prepared using either batch or continuous modes of manufacture. Preferably, the ingredients such as silicone polymer, reinforcing filler, cure catalyst, adhesion promoter, plasticizers, process aids, and other additives are combined in a continuous compounding extruder to produce the desired sealant composition. Both the "A component" and the "B component" are prepared in this manner. The continuous compounding extruder can be any continuous compounding extruder such as the twin screw Werner-Pfleiderer extruder, or a Buss, or P.B. Kokneader extruder.

In the broadest conception of the present invention, all the ingredients may be mixed in the continuous compounding extruder, that is silanol polymer, filler, plasticizer, a condensation catalyst and an adhesion promoter, etc. In such a process, which is continuous, the extruder is operated at a range of 40° to 100° C., but more preferably in the range of 50° to 80° C and the extruder is operated at a partial vacuum so as to remove volatiles during the mixing process.

As used herein the term architectural element denotes a prefabricated or manufactured unit useful or used in construction comprising glazing and caulking or adhesive to bond the glazing to structural elements comprising the architectural element. As used herein the term glazing has its ordinary meaning, a meaning that is inclusive of glass and glass substitutes such as polyacrylates, specifically polymethylmethacrylate and polycarbonates and the like including but not limited to the transparent, translucent and opaque varieties of glazing. As used herein the term caulking or adhesive encompasses or comprises the silicone compositions of the present invention. As used herein structural elements are materials used for the construction of buildings, e.g. wood, stone, brick, steel, aluminum, brass, iron, copper, concrete, plastic, plastic covered wood or metal and the like. A non-limiting list of exemplary architectural elements comprises among others: doors containing one or more windows, prefabricated windows, sliding doors with one or more windows, folding doors with one or more windows, curtainwall, shop glazing, structural glazing and the like.

The compositions of the present invention are curable compositions that rapidly develop a green strength after curing for a period of time. These compositions develop a green strength ranging from about 1 psi to about 75 psi as measured by WPSTM test C-1221 after curing for a time period ranging from about 1 minute to about 60 minutes, preferably these compositions develop a green strength ranging from about I psi to about 45 psi as measured by WPSTM test C-1221 after curing for a time period ranging from about 1 minute to about 60 minutes, more preferably these compositions develop a green strength ranging from about I psi to about 35 psi as measured by WPSTM test C-1221 after curing for a time period ranging from about I minute to about 60 minutes, and most preferably these compositions develop a green strength ranging from about 1 psi to about 25 psi as measured by WPSTM test C-1221 after curing for a time period ranging from about 1 minute to about 60 minutes. The curing time period for measurement of green strength may range from about 1 minute to about 60 minutes, preferably for a time period ranging from about 1 minute to about 45 minutes, more preferably for a time period ranging from about 1 minute to about 30 minutes, and most preferably for a time period ranging from about 1 minute to about 15 minutes.

EXPERIMENTAL

The following examples were prepared using the above continuous compounding process and are illustrative of the present invention.

Example 1:

This experiment demonstrates the rapid strength build offered by the sealants of the present invention with a typical commercial 1-part window bedding sealant. As 1-part sealants are well known to only slowly build strength, initial measurements were taken only after the sealant was allowed to cure for 24 hrs. The following data was generated using lap shear adhesion as measured by WPSTM test C-1221. In all instances, the lap shear adhesion data was generated using test panels comprising wood and glass substrates. The panels were prepared using 1 inch coupons overlapping ½ inch using 1/16 inch of sealant in a wood to glass configuration. The samples were cured under 50%RH and 73F.

Table 1: Comparison of strength build of experimental 2-part sealant versus commercial 1-part

| Time (days) | 2-part formulation (psi) | 1-part formulation (psi) |
|---|---|---|
| 1 | 106 | 34 |
| 2 | 110 | 34 |
| 6 | 104 | 60 |
| 10 | 104 | 101 |

Table 2: Comparison of strength build of experimental 2-part sealant versus commercial 1-part

| | Adhesion | Strength (psi) |
|---|---|---|
| | 2-part | 1-part |
| Time | RapidStrength™ | SCS2511T |
| 15 min | 21 | * |
| 30 min | 31 | * |
| 1 hr | 49 | * |
| 3 hrs | 81 | * |
| 6 hrs | 102 | 25 |
| 24 hrs | 129 | 50 |
| 3 days | 122 | 52 |
| 7 days | 111 | 83 |
| 14 days | 127 | 96 |
| Note: * denotes uncured ("wet") sealant with no measurable strength | | |

Example 2:

This experiment is designed to demonstrate the rapid strength build of the primed and primerless versions of the experimental sealants of the present invention. As described in example 2, the strength measurements of data were obtained using lap shear test specimens comprising vinyl to glass test panels.

Table 3: Comparison of strength build of experimental 2-part sealant formulations

| Time | Formulation 1 (with primer) | | Formulation 2 (without primer) | |
|---|---|---|---|---|
| | Wood (psi) | Vinyl (psi) | Wood (psi) | Vinyl (psi) |
| 20 min. | 14 | 7 | 21 | 9 |
| 40 min. | 37 | 46 | 49 | 15 |
| 60 min. | 58 | 88 | 78 | 23 |
| 180 min. | 70 | 96 | 109 | 118 |
| 360 min. | 76 | 138 | 134 | 88 |
| 1 day | 193 | 197 | 133 | 139 |
| 3 days | 179 | 193 | 155 | 171 |
| 7 days | 163 | 148 | 172 | 141 |

As shown in the above data (Table 3), these formulations demonstrate excellent strength build between wood and glass, as well as vinyl (plastic) and glass.

Ingredients:

Polymer 1: a mixture of polydimethylsiloxanes endblocked with hydroxyl groups and having an overall viscosity of approximately 10,000 cps comprising polymers described by the formula

Precipitated Calcium Carbonate: a precipitated stearic acid treated calcium carbonate and having a particle size of approximately 0.07 microns.

Plasticizer: polydimethylsiloxanes endblocked with trimethylsilyl groups and having a viscosity of approximately 100 cps.

Rheology Additive: polyalkyleneoxide modified organosilicone co-polymer having a viscosity of about 100 to about 3000centipoise at 25C.

Polymer 2: polydimethylsiloxanes endblocked with trimethylsilyl groups and having a viscosity of approximately 10,000 cps.

Treated Silica: an octamethylcyclotetrasiloxane treated fumed silica filler with a surface area of approximately 200 $\pm$ 20 m$^2$/g.

Pigment: a dispersion of approximately 50% by weight carbon black in polydimethylsiloxanes endblocked with trimethylsilyl groups

Adhesion Promoter 1: aminoethylaminopropyltrimethoxysilane

Adhesion Promoter 2: tris-trimethoxysilylpropylisocyanurate

NPS: tetra-N-propylsilicate

DBTDL: Dibutyltin dilaurate

Table 4: Examples of experimental compositions

|  | Formulation 1 | Formulation 2 |
|---|---|---|
| Ingredients (weight %) |  |  |
| Part 1 |  |  |
| Polymer 1 | 42.8 | 42.8 |
| Ppt. Calcium Carbonate | 45.0 | 45.0 |
| Plasticizer | 11.5 | 11.5 |
| Rheology Additive | 0.7 | 0.7 |
|  |  |  |
|  |  |  |
| Part 2 |  |  |
| Polymer 2 | 59.76 | 55.61 |
| Treated Silica | 11.6 | 10.6 |
| Pigment | 0.74 | 0.74 |
| Adhesion Promoter 1 | 15.8 | 15.9 |
| Adhesion Promoter 2 | - | 4.0 |
| NPS | 11.63 | 12.83 |
| DBTDL | 0.47 | 0.32 |

GREEN STRENGTH MEASUREMENT BY LAP SHEAR

Green strength was measured by the following procedure:

The surfaces of all substrates (glass, vinyl, wood, etc) were cleaned prior to preparation of the lap shear test coupon. Glass and vinyl substrates were cleaned using a soap (Ajax® Dish Liquid) and water solution. After cleaning, the surfaces of the substrates were immediately wiped dry with a clean Kimwipe®. The wood substrates were wiped using a dry Kimwipe®.

The test specimens measuring 1 inch by 3 inches, were prepared using a jig assembly in order to ensure the reproducibility of the bond line thickness (1/16 of an inch) and overlap (0.50 inches) of the lap shear test specimen. The test specimens were cured under standard conditions 25° C and 50% relative humidity (RH) for the time specified. Performance measurements were obtained using a standard tensile tester. Each test specimen was pulled (at a crosshead speed of 0.5 in, per minute) to failure. The lap shear strength (psi) was calculated in accordance with the following formula:

$$\text{Lap Shear Strength (psi)} = \frac{\text{Peak load (lb.)}}{\text{Bonded Area (sq. in.)}}$$

## Claims

**1.** A curable two part sealant composition comprising :

(a) a diorganopolysiloxane in an amount ranging from about 5 weight percent to about 80 weight percent of the total composition wherein the silicon atom at each polymer chain end is silanol terminated;
(b) diorganopolysiloxane in an amount ranging from slightly above 0 weight percent to about 35 weight percent wherein the silicon atom at each polymer chain end is alkyl terminated
(c) an alkylsilicate in an amount ranging from about 0.1 weight percent to about 10 weight percent;
(d) a condensation catalyst in an amount ranging from about 0.001 weight percent to about 1 weight percent; and
(e) an alkoxysilane adhesion promoter in an amount ranging from about 0.1 weight percent to about 20 weight percent;

wherein said sealant composition has a green strength of from about 6,895 kPa [1 psi] to about 517,1 kPa [75 psi] as measured by WPSTM test C-1221 after curing for a time period of from about 1 minute to about 60 minutes.

**2.** The sealant composition of claim 1, further comprising a reinforcing filler selected from the group consisting of ground calcium carbonate, precipitated calcium carbonate, colloidal calcium carbonate, calcium carbonate treated with compounds stearate or stearic acid; fumed silica, precipitated silica, silica gels, d hydrophobized silicas, hydrophilic silica gels; crushed quartz, ground quartz, alumina, aluminum hydroxide, titanium hydroxide, clay, kaolin, bentonite montmorillonite, diatomaceous earth, iron oxide, carbon black and graphite and mixtures thereof in an amount ranging from about 1 weight percent to about 80 weight percent of the total composition.

**3.** The sealant composition of claim 1 or claim 2 wherein said first component (A) further comprising a non-ionic surfactant selected from the group of surfactants consisting of polyethylene glycol, polypropylene glycol, ethoxylated castor oil, oleic acid ethoxylate, alkylphenol ethoxylates, copolymers of ethylene oxide and propylene oxide and copolymers of silicones and polyethers, copolymers of silicones and copolymers of ethylene oxide and propylene oxide and mixtures thereof in an amount ranging from 0.1 weight percent to about 10 weight percent of the total composition,

- wherein preferably the non-ionic surfactant selected from the group of surfactants consisting of copolymers of ethylene oxide and propylene oxide, copolymers of silicones and polyethers, copolymers of silicones and copolymers of ethylene oxide and propylene oxide and mixtures thereof,
- wherein preferably the amount of the silanol terminated diorganopolysiloxane, component (a), ranges from in amount from 35 weight % to 45 weight % of the total composition, and/or the amount of the alkyl terminated diorganopolysiloxane, component (b), ranges in amount from 8 weight % to 20 weight % of the total composition, and/or the amount of the alkyl silicate, component (c), ranges in amount from 0.5 weight % to 1.5 weight % of the total composition, and/or the amount of condensation catalyst, component (d), ranges in amount from 0.005 weight % to 0.1 weight % of the total composition, and/or the amount of reinforcing filler, component (f), ranges in amount from 37 weight % to 49 weight % of the total composition, and/or the amount of alkoxysilane adhesion promoter, component (e), ranges in amount from 0.5 weight percent to 2 weight percent of the total composition.

4. The sealant composition of any of claims 1-3 which is a two-part room temperature vulcanizing silicone composition curable in the presence of moisture.

5. The sealant composition of any of claims 1 - 4, wherein the composition comprises first and second components (A; B) which are separately prepared and mixed for curing.

6. The sealant composition of claim 5, wherein said first component (A) comprises (i) about 15 to about 60 weight% of the diorganopolysiloxane wherein the silicon atom at each polymer chain end is silanol terminated and (ii) a filler; and
said second component (B) comprises (i)about 0.3 to about 5.0 weight% of the alkylsilicate, (ii) about 0.001 to about 1.0 weight % of the condensation catalyst and (iii) about 0.3 to about 10 weight percent of the adhesion promoter selected from the group consisting of N-2-aminoethyl-3-aminopropyltriethoxysilane,_-aminopropyltriethoxysilane,_-aminopropyltrimethoxysilane, aminopropyltrimethoxysilane, bis-_-trimethoxysilypropyl)amine, N-Phenyl-_-amino-propyltrimethoxysilane, triaminofunctionaltrimethoxysilane,_- aminopropylmethyldiethoxysilane,_-aminopropyl-methyldiethoxysilane, methylaminopropyltrimethoxysilane, 4-amino-3,3,-dimethylbutyltrimethoxysilane, and N-ethyl-3-trimethoxysilyl-2-methylpropanamine.

7. A manufacturing process for manufacturing architectural elements having a rate of manufacture of said architectural elements said architectural elements comprising a curable sealant composition comprising:

(a) a diorganopolysiloxane in an amount ranging from about 5 weight percent to about 80 weight percent wherein the silicon atom at each polymer chain end is silanol terminated;
(b) diorganopolysiloxane in an amount ranging from slightly above 0 weight percent to about 35 weight percent wherein the silicon atom at each polymer chain end is alkyl terminated;
(c) an alkylsilicate in an amount ranging from about 0.1 weight percent to about 10 weight percent;
(d) a condensation catalyst in an amount ranging from about 0,001 weight percent to about 1 weight percent; and
(e) an alkoxysilane adhesion promoter in an amount ranging from about 0.1 weight percent to about 10 weight percent; and

said sealant having a green strength between about 6,895 kPa [1 psi] and about 517,1 kPa [75 psi] after curing for a period of time ranging from 1 minute to 60 minutes, wherein said manufacturing process produces said architectural elements at a rate of manufacture faster than a similar manufacturing process using a sealant having a green strength of 0 psi after 60 minutes.

8. The manufacturing process of claim 7 wherein said sealant has a green strength between 6,895 kPa [1 psi] and 310,3 kPa [45 psi] after curing for a period of time ranging from 1 minute to 60 minutes.

9. The manufacturing process of claim 7 or 8 wherein the sealant composition further comprises a reinforcing filler selected from the group consisting of ground calcium carbonate, precipitated calcium carbonate, colloidal calcium carbonate, calcium carbonate treated with compounds stearate or stearic acid; fumed silica, precipitated silica, silica gels, hydrophobized silicas, hydrophilic silica gels, crushed quartz, ground quartz, alumina, aluminum hydroxide, titanium hydroxide, clay, kaolin, bentonite montmorillonite, diatomaceous earth, iron oxide, carbon black and graphite and mixtures thereof in an amount ranging from about 1 weight percent to about 80 weight percent.

10. The manufacturing process of claim 7 wherein the sealant composition further comprises a non-ionic surfactant selected from the group of surfactants consisting of polyethylene glycol, polypropylene glycol, ethoxylated castor oil, oleic acid ethoxylate, alkylphenol ethoxylates, copolymers of ethylene oxide and propylene oxide and copolymers of silicones and polyethers, copolymers of silicones and copolymers of ethylene oxide and propylene oxide and mixtures thereof in an amount ranging from 0.1 weight percent to 10 weight percent,

- wherein preferably the non-ionic surfactant selected from the group of surfactants consisting of copolymers of ethylene oxide and propylene oxide, copolymers of silicones and polyethers, copolymers of silicones and copolymers of ethylene oxide and propylene oxide and mixtures thereof,

- wherein preferably the amount of the silanol terminated diorganopolysiloxane, component (a), ranges from in amount from 35 weight % to 45 weight % of the total composition, and/or the amount of the alkyl terminated diorganopolysiloxane, component (b), ranges in amount from 8 weight % to 20 weight % of the total composition, and/or the amount of the alkyl silicate, component (c), ranges in amount from 0.5 weight % to 1.5 weight % of the total composition, and/or the amount of condensation catalyst, component (d), ranges in amount from 0.005 weight % to 0.1 weight % of the total composition, and/or the amount of reinforcing filler, component (f), ranges in amount from 37 weight % to 49 weight % of the total composition.

11. The manufacturing process of any of claims 7-10, comprising separately preparing the first and second compositions, and then mixing the first and second components together for curing.

12. An architectural element comprising and formed with the cured composition of any one of claims 1 to 6 and/or manufactured by the process of any one of claims 7 to 11.

13. The architectural element of claim 12 wherein said architectural element is a window, a door, structural glazing or curtainwall.

**EP 2 275 492 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 54896904 P
- US 5213899 A
- US 4554338 A
- US 4956436 A
- US 5489479 A
- US 5744703 A